# DEMANDE DE BREVET EUROPEEN

(11) **EP 2 835 056 A1**
(43) Date de publication de la demande: **11.02.2015**
(21) Numéro de dépôt: 14290215.4
(22) Date de dépôt: 23.07.2014
(51) Int. Cl.: A23G 7/00, B65B 35/20, B65B 59/00, B65G 47/88, B65G 47/71, B65B 65/00

(54) **Dispositif de transfert d'éléments malléables**

(30) Priorité: 05.08.2013 FR 1301882
(71) Demandeur: Cemes, 86580 Vouneuil Sous Biard (FR)
(72) Inventeur: Andreo, Etienne, 86580 Vouneuil sous Biard (FR); Eneau, Sylvain, 86580 Vouneuil sous Biard (FR)
(74) Mandataire: Célanie, Christian

(57) **Abrégé**

L'invention concerne un dispositif de transfert (11, 12, 13) d'éléments malléables d'une première position sur un bâti (7) vers une seconde position sur ledit bâti (7).

Ce dispositif est constitué d'un premier bras (11) dont l'extrémité libre (14) est destinée à venir successivement en contact avec chaque élément malléable et dont l'autre extrémité est solidaire en rotation autour d'un premier axe (15), d'un second bras (12) dont une extrémité (16) est solidaire en rotation d'un second axe (17) fixé au bâti (7) et l'autre extrémité (18) solidaire d'un troisième bras (13) relié au premier bras (11), l'ensemble formant un parallélogramme déformable.

Application à la réalisation de machines de conditionnement de gommes à mâcher.

## Description

Le secteur technique de la présente invention est celui des machines d'emballage d'éléments malléables tels des gommes d'épaisseur variable.

On connaît de nombreux brevets décrivant des machines d'emballage de ces éléments malléables soit sous forme de plaques soit sous forme de bâtonnets. La cadence d'emballage est de nos jours limitée à une quantité ne dépassant pas 1500 à 2000 unités par seconde. L'évolution de la demande de gommes à mâcher implique l'augmentation de la cadence d'emballage de ces machines vers des quantités dépassant les 3000 unités par seconde.

On peut citer par exemple le brevet EP-1264544 qui décrit un procédé et un appareil de production en continu de gommes mais dont la cadence est limitée.

On peut citer encore la demande internationale WO2013/068050 qui décrit une machine assurant les principales phases de traitement des gommes jusqu'à leur emballage final.

On peut encore citer le brevet DE-102011084018 décrivant le même type de machine permettant la prise en charge des gommes jusqu'à leur emballage.

Tous ces documents ne décrivent aucune machine permettant d'atteindre une performance élevée d'emballage requise de nos jours d'autant plus que l'épaisseur de la gomme rendait plus complexe encore la solution du problème. De plus, une augmentation de la cadence provoque un échauffement des gommes dû à sa viscoélasticité, ce qui est nuisible au bon fonctionnement de la machine en raison de l'adhérence de celles-ci sur son bâti.

On sait qu'une machine d'emballage de gommes comprend généralement un module de découpe de la matière malléable, un module de transfert et un module d'emballage.

Il est apparu au demandeur que la solution résidait au niveau du module d'emballage des gommes sur lequel il est difficile d'intervenir afin d'augmenter la cadence d'emballage. C'est au bout de cette réflexion qu'une solution a été trouvée en couplant deux modules d'emballage des gommes à l'aide d'un module d'alimentation unique. En effet, la cadence de délivrance des gommes à emballer par le module d'alimentation peut être augmentée considérablement sans nuire aux performances de la machine d'emballage.

Le but de la présente invention est donc de fournir un dispositif qui permet d'alimenter en gommes deux modules d'emballage à partir d'un module unique d'alimentation.

L'invention a donc pour objet un dispositif de transfert d'éléments malléables d'une première position sur un bâti vers une seconde position sur ledit bâti, caractérisé en ce qu'il est constitué d'un premier bras dont l'extrémité libre est destinée à venir successivement en contact avec chaque élément malléable et dont l'autre extrémité est solidaire en rotation autour d'un premier axe, d'un second bras dont une extrémité est solidaire en rotation d'un second axe fixé au bâti et l'autre extrémité solidaire d'un troisième bras relié au premier bras, l'ensemble formant un parallélogramme déformable.

Selon une caractéristique de l'invention, le dispositif est entraîné en translation à l'aide d'un moyen rotatif.

Selon une autre caractéristique de l'invention, le moyen rotatif est constitué d'un disque rotatif muni d'un chemin sensiblement oblong et le second bras est muni d'un doigt destiné à circuler dans le chemin oblong afin d'imprimer un mouvement de va-et-vient du premier bras entre lesdites première et second position.

Avantageusement, le disque est entraîné en rotation à l'aide d'un engrenage lui-même entraîné par un moteur.

Selon encore une autre caractéristique de l'invention, le troisième bras est relié au premier bras de manière ajustable.

Selon encore une autre caractéristique de l'invention, la duré du transfert des éléments malléables est ajustée en fonction de la vitesse de rotation du moyen rotatif.

Selon encore une autre caractéristique de l'invention, l'extrémité libre du premier bras se présente sous la forme d'un peigne composé d'une plaque usinée.

Selon encore une autre caractéristique de l'invention, les première et seconde positions sont en relation avec deux dispositifs avals de prise en charge des éléments malléables.

Selon encore une autre réalisation, le troisième bras est fixé au premier bras à l'aide d'un manchon permettant de faire varier son point de fixation sur ledit premier bras.

Un tout premier avantage de la présente invention réside dans l'obtention d'une cadence d'emballage élevée sans modification complète d'une machine d'emballage.

Un autre avantage réside dans le fait que le dispositif selon l'invention peut être intégré dans la plupart des machines d'emballage existantes.

Un autre avantage encore de l'invention réside dans la simplicité de réalisation du système assurant un transfert sans dégradation des gommes.

Un autre avantage encore de l'invention réside dans l'absence de contraintes liées aux dimensions des tablettes de gomme et à leur viscoélasticité.

L'invention permet de disposer d'une seule zone de chargement pour deux machines d'emballage de gomme, ce qui simplifie la ligne de fabrication.

Le dispositif de transfert est compact car directement intégré dans le système de dépilage/pré-découpage du module d'emballage.

Un autre avantage encore de l'invention réside dans l'absence de risque de déformation plastique de la gomme qui subit peu ou pas d'échauffement.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue générale d'une machine d'emballage de gommes sous forme d'éléments malléables,
- la figure 2 représente une vue montrant le dispositif de transfert dans l'environnement de la machine d'emballage,
- la figure 3 représente une vue détaillée du dispositif de transfert,
- la figure 4 montre un détail de réalisation du peigne,
- la figure 5 montre le moyen d'entraînement du dispositif de transfert, et
- les figures 6A-6E montrent des vues illustrant les différentes positions du dispositif de transfert.

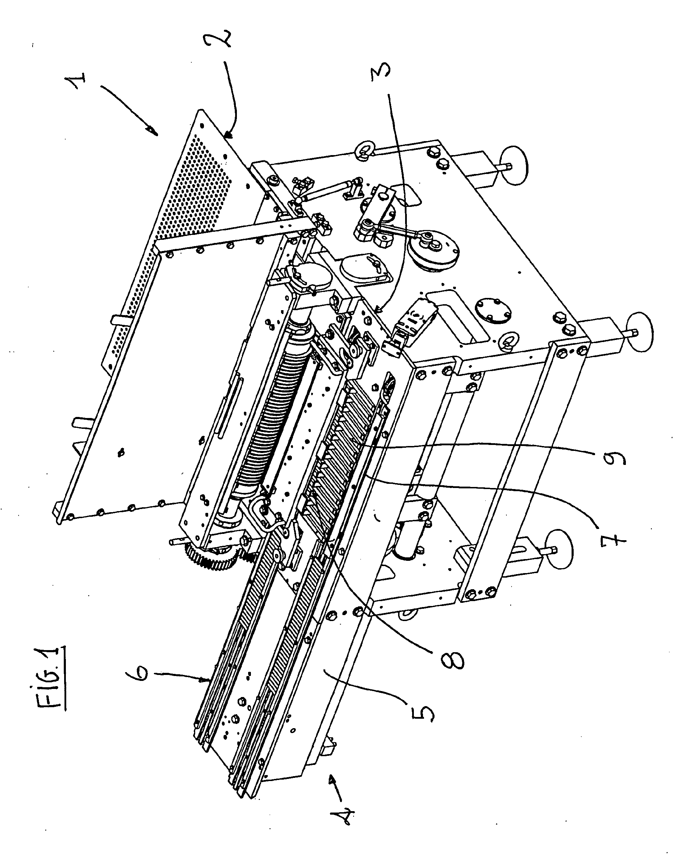

Afin de situer l'invention dans son contexte, on a représenté sur la figure 1 une partie essentielle de la machine d'emballage 1 comprenant un module 2, partiel, de préparation des gommes, un module 3 de transfert des gommes et un module, partiel, d'emballage 4. Le module d'emballage 4 est en fait constitué de deux unités d'emballage 5 et 6 disposées en parallèle qu'il s'agit d'alimenter en gommes vers le module d'emballage proprement dit non représenté. Ces unités 5 et 6 définissent donc une première position, par exemple pour l'unité 5, et une seconde position pour l'autre unité 6.

Le module de transfert 3 comprend notamment un bâti 7 sur lequel les gommes sont amenées pour être dirigées vers chacune des unités 5 et 6 à l'aide d'un système de chaînes d'entraînement non représenté pour faciliter la compréhension. Ces moyens sont connus en eux-mêmes et n'ont pas besoin d'être décrits.

Sur la figure, on voit que le bâti 7 présente une surface d'évolution sur laquelle arrivent les éléments malléables en groupe séparé pour un transfert vers l'une ou l'autre des unités 5 ou 6 à l'aide d'un peigne 26 disposé en dessous de la surface d'évolution dont les dents 8 sont visibles. On voit que ces dents 8 débouchent entre les espacements d'une sole 9 constituée par des plaques espacées. Il va de soi que le peigne pourrait être disposé au-dessus de la surface d'évolution en étant extérieur au bâti 7.

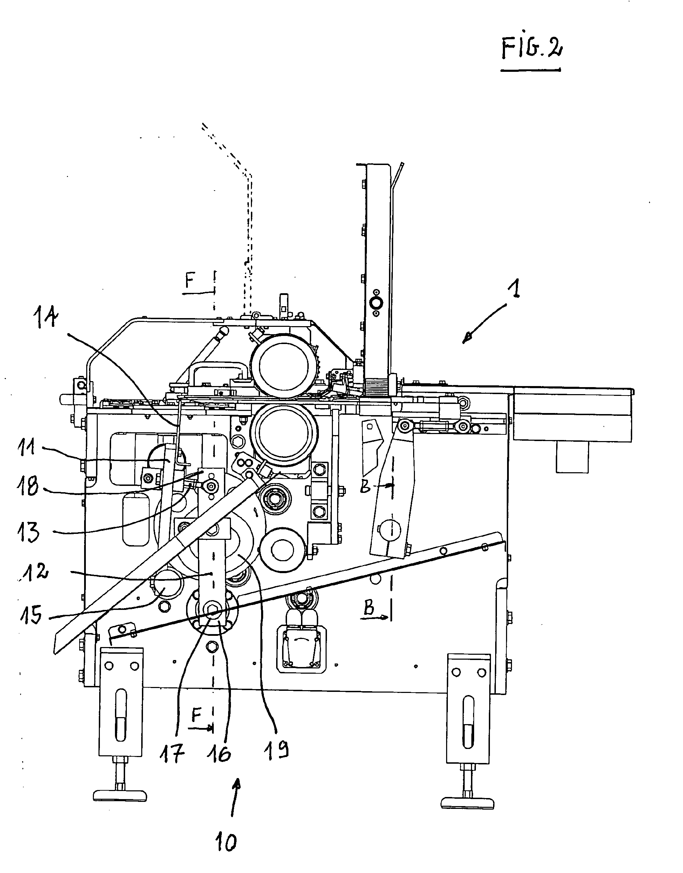

Sur la figure 2, on a représenté le dispositif de transfert 10 des éléments malléables constitué d'un premier bras 11, un second bras 12 et un troisième bras 13. Le bras 11 présente une extrémité libre 14 qui est destinée à venir successivement en contact avec chaque groupe d'éléments malléables et dont l'autre extrémité est solidaire en rotation autour d'un premier axe 15 fixé au bâti 7. Le second bras 12 est solidaire à une extrémité 16 en rotation d'un second axe 17 fixé également au bâti 7 et l'autre extrémité 18 est solidaire du troisième bras 13. Le troisième bras 13 est par ailleurs relié au premier bras 11. L'ensemble ainsi réalisé est articulé pour former un parallélogramme déformable par rotation autour des diverses articulations.

Le second bras 12 est entraîné selon un mouvement alternatif à l'aide d'un moyen rotatif 19.

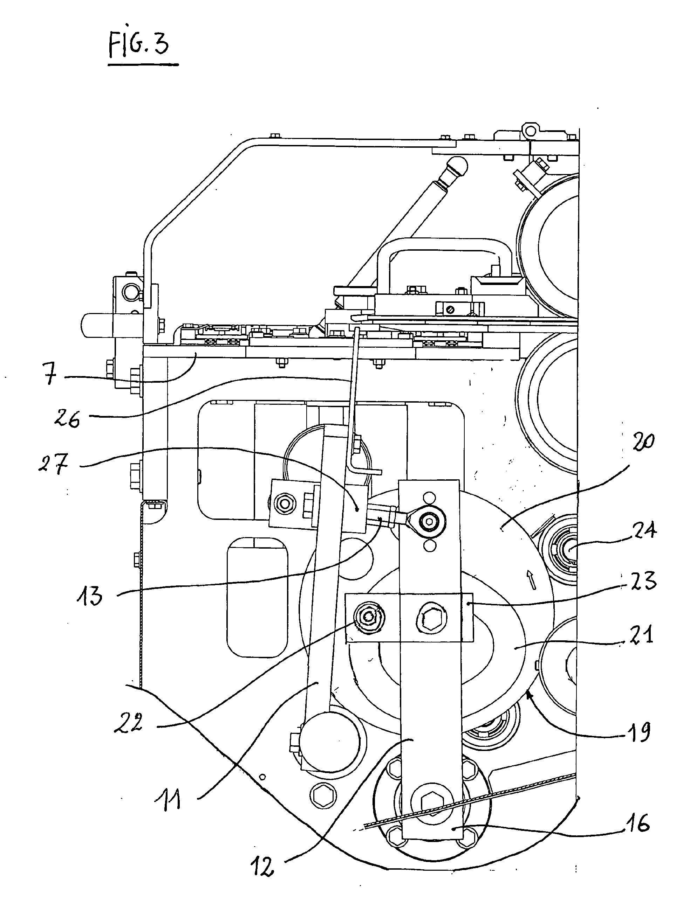

La figure 3 est une vue agrandie du dispositif de transfert entraîné en translation à l'aide du moyen rotatif 19. Celui-ci est constitué d'un disque rotatif 20 muni d'un chemin 21 sensiblement oblong. Le second bras 12 est muni d'un doigt 22 dont seul la tête est visible. Ce doigt 22 est ici solidaire d'une plaque 23 fixée sur le bras 12 de manière à déporter ce doigt. Bien entendu, le doigt 22 pourrait être fixé directement sur le bras 12. Ce doigt 22 est destiné à circuler dans le chemin oblong 21 sous l'effet de la rotation du disque 20. Ce mouvement de rotation imprime alors un mouvement de va-et-vient du dispositif de transfert et conséquemment du premier bras 11 entre lesdites première et second positions, bras 11 prolongé par une plaque en saillie au niveau du tablier 7.

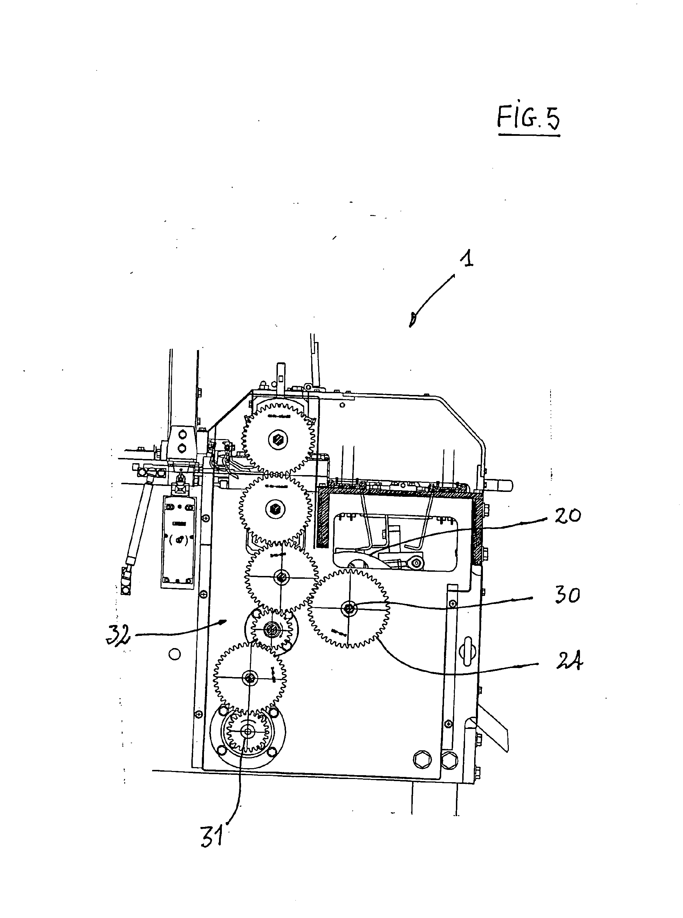

Le disque 20 est par exemple entraîné en rotation par un engrenage 24 dont la motorisation est décrite ci-après en relation avec la figure 5.

Sur la figure, on voit que le troisième bras 13 est relié au premier bras 11 par l'intermédiaire d'un manchon 27 vissé sur son extrémité libre. Ce manchon 27 permet d'ajuster la longueur du troisième bras 13 afin de faire varier l'amplitude du déplacement du dispositif de transfert La longueur du troisième bras 13 peut être ajustée. Cette disposition est prévue pour adapter le dispositif de transfert à divers types de machine d'emballage en réduisant ou en accroissant la longueur de ce bras 13. Ainsi, la modification de la course du bras 11 est obtenue en modifiant le point de fixation du bras 13 sur le bras 12 pour un réglage grossier, par exemple en prévoyant trois trous de fixation (voir fig.3). En modifiant la position du manchon 27 sur le bras 11, on obtient un réglage fin du débattement de ce bras 11.

Ces deux réglages permettent au dispositif de s'adapter à divers types de machines d'emballage.

Ainsi, la duré du transfert des éléments malléables est ajustée en fonction de la vitesse de rotation du moyen rotatif 19.

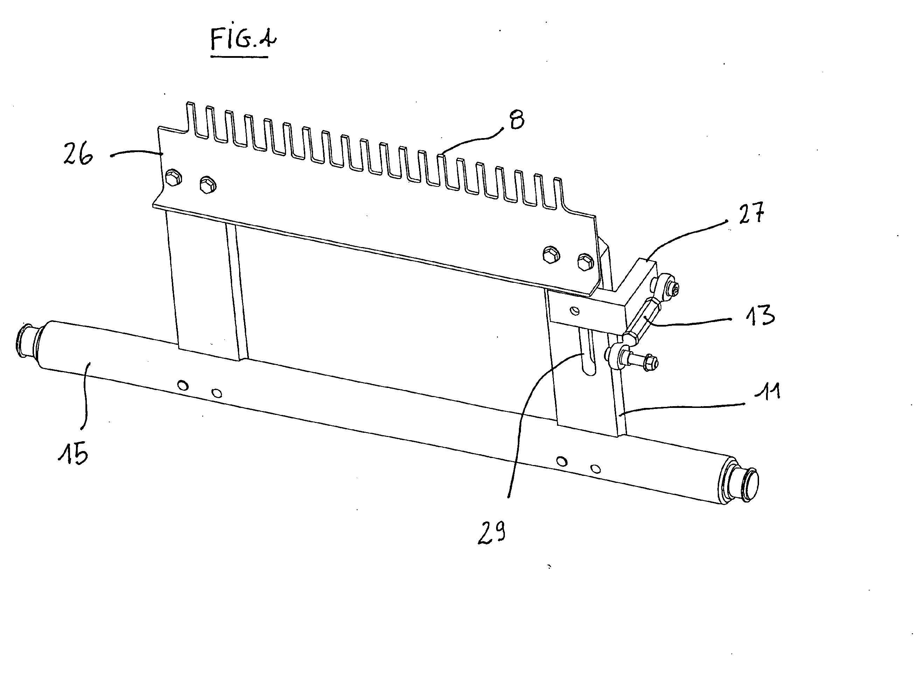

Sur la figure 4, on a représenté l'extrémité libre du premier bras 11 se terminant par le peigne 26 prolongé par les dents 8. Ce peigne 26 délimite une surface continue avec le tablier du bâti 7 afin de prendre en charge les éléments malléables pour les diriger vers l'un ou l'autre des modules 5 et 6 en aval respectivement entre les première et seconde positions. Comme indiqué précédemment, le peigne 26 est solidaire du bras 11 lui-même solidaire en rotation de l'axe 15 et relié au bras 13 par le manchon 27. On notera que le bras 11 est par exemple muni d'une rainure 29 dans laquelle le manchon 27 peut être fixé à différents niveaux.

Sur la figure 5, on a décrit un exemple du moyen d'entraînement du dispositif de transfert. On retrouve sur cette figure le disque 20 et l'engrenage 24 en rotation autour d'un axe 30. Comme on le voit sur cette figure, la machine d'emballage 1 est équipée d'un engrenage principal 31 soumis à l'action d'un moteur non représenté en relation avec un train d'engrenages 32 commandant les différents mouvements. Ainsi, l'engrenage 24 est entraîné par ce train d'engrenage 32 pour assurer le mouvement de va-et-vient du dispositif de transfert partiellement visible sur la figure.

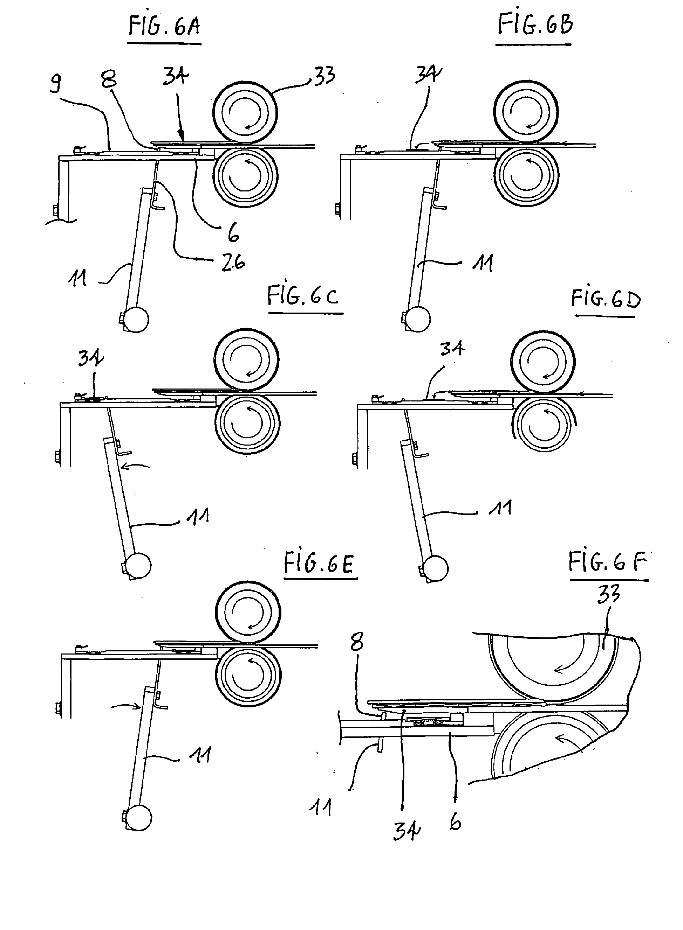

Afin de mieux expliciter le fonctionnement du peigne 26 attaché au bras 11, on a représenté sur les figures 6A-6E les différentes positions instantanées du dispositif de transfert. Le cycle de transfert des bandes de gomme 34 comprend cinq positions intermédiaires. Pour des raisons de commodité, on a prévu les positions droite et gauche ci-après du dispositif de transfert en alignement avec les pistes 5 et 6 du module d'emballage de la gomme à mâcher.

Sur la figure 6A, quatre bandes de gomme à mâcher sont en attente en aval des rouleaux rotatifs 33, le peigne 8 est en position d'arrêt sur la droite dans le plan de la figure.

Sur la figure 6B, une bande 34 a été poussée à l'aide des rouleaux rotatifs 33 pour se trouver sur la sole 9 de la machine.

Sur la figure 6C, le bras 11 entraîne le peigne 8 en translation pour transférer la bande 34 vers la gauche en direction d'une machine d'emballage non visible, par exemple vers la première piste 5. En fin de transfert, le peigne 8 s'arrête suivant une durée définie en position gauche.

Sur la figure 6D, le bras 11 conserve la position précédente et une nouvelle bande 34 est poussée sur la sole 9.

Sur la figure 6E, le bras 11 engage son mouvement de translation en poussant la bande 34 de la sole 9 vers la droite dans le plan de la figure en direction d'une machine d'emballage par exemple vers la seconde piste 6. En fin de transfert, le peigne s'arrête en position droite.

Sur la figure 6F, on a représenté une vue agrandie des bandes 34, dont quatre d'entre elles sont représentées. Ces bandes sont produites de manière connue par le module de préparation des gommes. On voit qu'une bande 34 est disposée dans le prolongement de la seconde piste 6.

Diverses variantes de l'invention peuvent être envisagées. Ainsi, on a prévu un train d'engrenages 32 permettant l'entraînement du dispositif de transfert. Il va de soi que chaque élément rotatif peut être entraîné seul.

## Revendications

1. Dispositif de transfert (11, 12, 13) d'éléments malléables d'une première position sur un bâti (7) vers une seconde position sur ledit bâti (7), **caractérisé en ce qu'**il est constitué d'un premier bras (11) dont l'extrémité libre (14) est destinée à venir successivement en contact avec chaque élément malléable et dont l'autre extrémité est solidaire en rotation autour d'un premier axe (15), d'un second bras (12) dont une extrémité (16) est solidaire en rotation d'un second axe (17) fixé au bâti (7) et l'autre extrémité (18) solidaire d'un troisième bras (13) relié au premier bras (11), l'ensemble formant un parallélogramme déformable.

2. Dispositif de transfert (11, 12, 13) selon la revendication 1, **caractérisé en ce qu'**il est entraîné en translation à l'aide d'un moyen rotatif (19).

3. Dispositif de transfert selon la revendication 2, **caractérisé en ce que** le moyen rotatif (19) est constitué d'un disque rotatif (20) muni d'un chemin (21) sensiblement oblong et le second bras (12) est muni d'un doigt (22) destiné à circuler dans le chemin oblong (21) afin d'imprimer un mouvement de va-et-vient du premier bras entre lesdites première et second position.

4. Dispositif de transfert (11, 12, 13) selon la revendication 3, **caractérisé en ce que** le disque (20) est entraîné en rotation à l'aide d'un engrenage (24) entraîné par un moteur (31).

5. Dispositif de transfert selon l'une des revendications précédentes, **caractérisé en ce que** le troisième bras (13) est relié au premier bras (11) de manière ajustable.

6. Dispositif de transfert (11, 12, 13) selon la revendication 2 à 5, **caractérisé en ce que** la duré du transfert des éléments malléables est ajustée en fonction de la vitesse de rotation du moyen rotatif (19).

7. Dispositif de transfert (11, 12, 13) selon l'une quelconque des revendications précédentes, **caractérisé en ce que** l'extrémité libre du premier bras (11) se présente sous la forme d'un peigne (26) prolongé par des dents (8).

8. Dispositif de transfert (11, 12, 13) selon la revendication 7, **caractérisé en ce que** les première et seconde positions sont espacées l'une de l'autre pour être en alignement avec les deux modules d'emballage (5, 6).

9. Dispositif de transfert (11, 12, 13) selon l'une des revendications précédentes, **caractérisé en ce que** le troisième bras (13) est fixé au premier bras (11) à l'aide d'un manchon (27) permettant de faire varier son point de fixation sur ledit premier bras.
